# EUROPÄISCHE PATENTSCHRIFT

(11) **EP 0 520 174 B1**
(45) Veröffentlichungstag und Bekanntmachung des Hinweises auf die Patenterteilung: **09.08.1995**
(21) Anmeldenummer: 92107927.3
(22) Anmeldetag: 12.05.1992
(51) Int. Cl.: G01C 19/72

(54) **Optischer Faserkreisel vom Sagnac-Typ**
Sagnac-type optical fiber gyroscope
Gyroscope à fibre optique du type Sagnac

(30) Priorität: 22.06.1991 DE 4120675
(43) Veröffentlichungstag der Anmeldung: 30.12.1992
(73) Patentinhaber: Daimler-Benz Aerospace Aktiengesellschaft, 81663 München (DE)
(72) Erfinder: Trommer, Gert, Dr., W-8000 München 40 (DE); Hartl, Engelbert, dr., W-8000 München 80 (DE); Müller, Reinhard, Dr., W-8039 Puchheim (DE)

(56) Entgegenhaltungen:
- DE-A- 3 942 819
- US-A- 4 653 917
- US-A- 4 712 306
- APPLIED OPTICS, Bd. 29, Nr. 36, 20. Dezember 1990, New York, US, Seiten 5360-5365, G.F.TROMMER et al: "Passive fiber optic gyroscope"
- JOURNAL OF LIGHTWAVE TECHNOLOGY; Bd. LT-1, Nr. 1, März 1983, New York, US, Seiten 71-74, K. BÖHM ET AL: "Performance of Lyot depolarizers with birefringent single-mode fibers"

## Beschreibung

Optische Faserkreisel vom Sagnac-Typ sind z.B. aus der US-PS 4,653,917 oder der DE-OS 38 05 905 bekannt.

Bei diesen Faserkreiseln werden Lichtquellen verwendet, die in einem breiten Frequenzband unpolarisiertes Licht abgeben, z.B. gemäß der genannten US-Patentschrift und im übrigen in der US-PS 4,167,744 beschriebene Superlumineszenzdioden, die räumlich kohärentes Licht mit Wellenlängen zwischen 10 und 20 nm aussenden; eine billigere Lösung, die zudem noch eine verbesserte Meßstabilität über lange Zeiträume ergibt, sind gemäß der erwähnten DE-OS 38 05 905 kantenemittierende Lumineszenzdioden, Multimode-Laserdioden mit faseroptischem Depolarisator oder superfluoreszente Monomode-Lichtleitfasern mit einer Halbleiterpumplichtquelle.

In dem Aufsatz von Trommer, Hartl, Müller et al in "APPLIED OPTICS", Band 29, Nr. 36 vom 20. Dezember 1990, Seiten 5360 bis 5365, sind für einen Faserkreisel gemäß der obigen DE-OS 38 05 905 die Funktionsgleichungen aufgestellt, mit denen die der Sagnac-Phase als Meßgröße entsprechende Drehrate des Faserkreisels bestimmt wird; vgl. a.a.O. die Gleichungen (18a),(18b), (18c) und (26). Die Drehrate wird angegeben als abhängig von verschiedenen Parametern, so z.B. den Eigenschaften des verwendeten 3 x 3-Kopplers, der Empfindlichkeit der Empfangsdioden, der Dämpfung der Faserspule und der Sagnac-Phase. Nicht mehr abhängig ist diese Funktionsgleichung von der Intensität der verwendeten Lichtquelle und auch nicht mehr von dem Kontrast des Interferenzsignales, der von den Eigenschaften der Faserspule abhängt. Diese dort angegebene Gleichung für die Drehrate hat allerdings nur Gültigkeit, solange der Kontrast des im Koppler erzeugten Interferenzsignales nicht Null wird. Der Kontrast verschwindet nicht, wenn die Faser der Faserspule absolut polarisationserhaltende Eigenschaften aufweist. Aus diesem Grunde werden für einen solchen Faserkreisel polarisationserhaltende Monomode-Fasern verwendet. Die Herstellungskosten für diese Fasern sind allerdings hoch.

Wenn Faserspulen aus billig herzustellenden, nicht polarisationserhaltenden Fasern gewickelt werden, kann der Kontrast des Interferenzsignales zu Null werden, so daß die Messung der Drehrate kein verwertbares Ergebnis bringt. Zur Kontraststabilisierung ist es bekannt, einen Faserdepolarisator an ein Ende der Faserspule aus nicht polarisationserhaltenden Fasern anzuspleißen; vgl. R. Ulrich: Polarization and Depolarization in Fiber Optic Gyroscope, Fiber Optic Rotation Sensors and Related Technologics, pp. 52-77 Springer-Verlag Berlin-Heidelberg (1982). Dieser Faserdepolarisator besteht aus mindestens zwei Stücken polarisationserhaltender Fasern, die so miteinander verspleißt sind, daß die Hauptachsen zweier benachbarter Faserstücke einen Winkel von 45° miteinander einschließen. Die Faserlängen sind so bemessen, daß diese und die Differenzen der Längen der Faserstücke größer sind als die Depolarisationslänge der polarisationserhaltenden Fasern; vgl. hierzu K. Böhm, K. Petermann: Performance of Light Depolarizers with Birefringent Single-Mode Fibres, J-LT (1) pp. 71-74 (1983). Eine einfache, dieser Regel genügende Anleitung zum Bau eines Depolarisators lautet: Die kürzeste Faserlänge muß größer sein als die Depolarisationslänge und jedes weitere Faserstück muß doppelt so lang sein wie das vorausgehende; in welcher Reihenfolge die Faserstücke verspleißt werden, ist hierbei bedeutungslos.

In der oben erwähnten Funktionsgleichung des Faserkreisels zur Bestimmung der Drehrate ist noch ein Term enthalten, der den Offset des Meßwertes aufgrund einer Polarisation in der Faserspule angibt. Dieser Term verschwindet, wenn der Faserkreisel mit Licht betrieben wird, das den Polarisationsgrad Null hat. Auch in diesem Falle ist jedoch ein Depolarisator an einem Ende der Faserspule zur Kontraststabilisierung notwendig. Zudem ändert sich der oben erwähnte Offset bei einer Änderung des Polarisationszustandes und nicht nur des Polarisationsgrades des verwendeten Lichts. Der Polarisationszustand reagiert bei Verwendung nicht polarisationserhaltender Fasern sehr empfindlich auf Umgebungsbedingungen: kleine Temperaturänderungen ergeben z.B. schon bedeutsame Änderungen in der Restdoppelbrechung der verwendeten Fasern und über den Polarisationszustand Änderungen im Offset.

Die Verwendung von unpolarisiertem Licht genügt nicht für das Verschwinden des Offset, wenn Polarisation im Faserkreisel selbst erzeugt wird. Es hat sich nun gezeigt, daß gerade nichtdoppelbrechende Fasern, wenn sie zu einer Spule gewickelt sind, unpolarisiertes Eingangslicht polarisieren können. Dieser Effekt beruht z.B. darauf, daß die Spule für Licht, das in der Wickelebene polarisiert ist, eine andere Dämpfung aufweist als für Licht, das senkrecht zur Wickelebene polarisiert ist. Die dadurch hervorgerufene Polarisierung des Lichts wird auch dann nicht aufgehoben, wenn ein idealer Depolarisator mit vollständiger Depolarisation an einem Ende der Faserspule entsprechend dem oben erwähnten Stand der Technik zur Kontraststabilisierung verwendet wird: vielmehr müßten, sofern genaueste Meßwerte erwartet werden, zusätzliche Maßnahmen vorgesehen werden, um den Effekt einer polarisierenden Faserspule bei Verwendung von nicht polarisationserhaltenden Fasern zu kompensieren.

Aus der US-A-4 712 306 ist ein Faserkreisel bekannt, der nicht polarisationserhaltende Fasern verwendet. Hier wird bereits vorgeschlagen, vor der Faserspule zur Verringerung der restlichen Doppelbrechung zwei Depolarisatoren in den Faserstrang zu plazieren, wobei jeder Depolarisator aus zwei Stücken von polarisationserhaltenden Fasern besteht, die miteinander so verspleißt sind, daß die Hauptachsen der benachbarten Faserstücken einen Winkel von 45° einschließen. Da bei diesem Faserkreisel 2 x 2-Koppler verwendet werden, müssen die beiden Enden der Faserspule noch mit Phasenmodulatoren versehen werden, um eine Funktion nahe am Quadraturpunkt zu ermöglichen. Die beiden Depolarisatoren werden daher nicht direkt an die Enden der Faserspule, sondern zwischen die Modulatoren und einen der vorliegenden 2 x 2-Koppler. Diese Anordnung ermöglicht es jedoch nicht, bei allen Bedingungen, so z.B. Temperaturschwankungen etc., die oben angegebenen Nachteile, insbesondere den Offset und die Kontrastinstabilität, zu vermeiden. Angaben über die Dimensionen der einzelnen Faserstücke der Depolarisatoren sind in diesem Dokument ebenfalls nicht vorhanden.

Der Erfindung liegt die Aufgabe zugrunde, einen Faserkreisel aus nicht polarisationserhaltenden Fasern und mit einem 3 x 3-Koppler anzugeben, bei dem eine zusätzliche Polarisation des von der Lichtquelle abgegebenen Lichtes zuverlässig verhindert wird, so daß bei allen Betriebsbedingungen ein Offset vermieden und der Kontrast stabil gehalten wird.

Diese Aufgabe ist gemäß der Erfindung durch die im kennzeichnenden Teil des Patentanspruches 1 angegebenen Merkmale gelöst.

Entscheidend ist demnach, daß direkt an den beiden Enden der Faserspule ein Faserdepolarisator jeweils aus zwei Faserstücken angespleißt ist, wobei die jeweils zwei Teilstücke der Fasern beider Depolarisatoren der oben angegebenen Regel hinsichtlich der Faserlängen eines einzigen Depolarisators genügen und die Längen der einzelnen Faserstücke, aus denen die beiden Depolarisatoren hergestellt sind, im Verhältnis 1:2 : 4:8 stehen. Die beiden Faserstücke aus polarisationserhaltenden Lichtleitfasern eines jeden Depolarisators sind miteinander so verspleißt, daß die Hauptachsen zweier benachbarter Faserstücke einen Winkel von 45° einschließen. Außerdem sind die Längen der Faserstücke und die Längendifferenzen zwischen unterschiedlichen Faserstücken jeweils größer als die Depolarisationslänge der polarisationserhaltenden Lichtleitfasern.

Ein Faserkreisel gemäß der Erfindung kann mit einer breitbandig unpolarisiertes Licht abgebenden Lichtquelle oder mit einer polarisiertes Licht abgebenden Lichtquelle betrieben werden.

Der Offset wird bei Verwendung von zwei idealen Depolarisatoren zu Null; bei technische realisierbaren, d.h. nicht idealen Depolarisatoren, die das eingestrahlte Licht nicht vollkommen depolarisieren, bleibt aufgrund der Dimensionsangaben der Faserstücke ein nur geringer Offset, der das Meßergebnis nicht wesentlich beeinflußt und dessen Größe von der Güte der Depolarisatoren abhängt.

Die Erfindung ist in einem Ausführungsbeispiel anhand der einzigen, einen Faserkreisel gemäß der Erfindung darstellenden Figur näher erläutert.

Ein Faserkreisel 1 weist einen 3 x 3-Richtkoppler 2 mit drei Eingängen e1, e2 und e3 sowie drei Ausgängen a1, a2 und a3 auf. Mit dem mittleren Eingang e1 ist die Anschlußfaser einer Lichtquelle L verbunden, die breitbandig unpolarisiertes Licht abgibt. Mit den symmetrisch zu diesem Eingang e1 gelegenen Eingängen e2 und e3 sind die Faseranschlußstücke von zwei Strahlungsdetektoren D2 und D3 verbunden.

Mit dem zentralen ersten Ausgang a1 ist ein Strahlungsdetektor D1 verbunden, der Intensitätsschwankungen der Lichtquelle bzw. Änderungen der Koppeleigenschaften des 3 x 3-Kopplers wahrnimmt und zur entsprechenden Kompensation dient. Mit den symmetrisch zu diesem zentralen Ausgang a1 gelegenen Ausgängen a2 und a3 ist jeweils ein Faserdepolarisator 3 bzw. 4 verbunden, der wie oben erläutert, aus mehreren Stücken polarisationserhaltender Fasern gespleißt ist, deren Faserlängen aufeinander abgestimmt und stets größer als die Depolarisationslänge der verwendeten polarisationserhaltenden Faser sind. Die Längen der einzelnen Faserstücken, aus denen die beiden Depolarisatoren 3 und 4 hergestellt sind, stehen z.B. im Verhältnis 1:2 : 4:8. Mit den Depolarisatoren 3 und 4 sind die beiden Enden einer Faserspule 5 verspleißt. Die Faserspule 5 besteht aus einer gewickelten Faser mit nicht polarisationserhaltenden Eigenschaften. Die Fasern sind z.B. nicht doppelbrechende Monomode-Fasern.

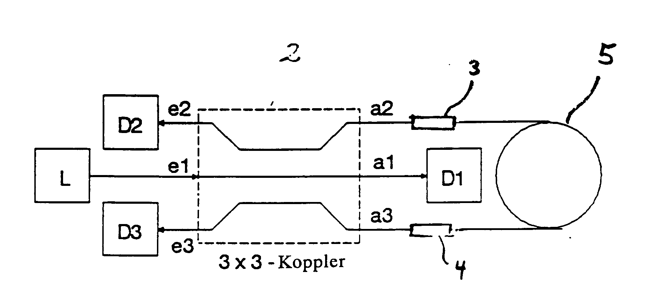

## Patentansprüche

1. Optischer Faserkreisel vom Sagnac-Typ mit einem 3 x 3-Koppler, einer Lichtleitfaserspule, deren zwei Enden mit zwei der drei Ausgänge des Kopplers optisch verbunden sind sowie mit einer Lichtquelle und zwei Strahlungsdetektoren, die mit den drei Eingängen des Kopplers optisch verbunden sind, dadurch gekennzeichnet,
daß die Lichtleitfaserspule (5) aus einer nicht polarisationserhaltenden Lichtleitfaser, insbesondere einer nicht doppelbrechenden Monomode-Faser besteht,
daß zwischen jedem Ende der Lichtleitfaserspule (5) und dem zugehörigen Ausgang (a2, a3) des 3 x 3-Kopplers (2) ein Depolarisator (3, 4) angeordnet, wobei die Depolarisatoren (3, 4) Faserdepolarisatoren sind und jeder Faserdepolarisator (3, 4) aus zwei Stücken von polarisationserhaltenden Lichtleitfasern besteht, die miteinander so verspleißt sind, daß die Hauptachsen zweier benachbarter Faserstücke einen Winkel von 45° einschließen,
daß die Längen der Faserstücke und die Längendifferenzen zwischen unterschiedlichen Faserstücken jeweils größer als die Depolarisationslänge der polarisationserhaltenden Lichtleitfaser sind, und
daß die Längen der vier Faserstücke, aus denen die Depolarisatoren (3, 4) zusammengesetzt sind, im Verhältnis 1:2 : 4:8 stehen.

2. Faserkreisel nach Anspruch 1, dadurch gekennzeichnet, daß für den Faserkreisel eine breitbandig unpolarisiertes Licht abgebende Lichtquelle (L) vorhanden ist.

3. Faserkreisel nach Anspruch 1, dadurch gekennzeichnet, daß für den Faserkreisel eine polarisiertes Licht abgebende Lichtquelle (L) vorhanden ist.

## Claims

1. An fibre optic gyro of the Sagnac type, comprising a 3x3 coupler, an optical fibre coil the two ends of which are optically connected to two of the three outlets of the coupler, as well as a light source and two radiation detectors which are optically connected to the three inlets of the coupler, **characterized in that**
the optical fibre coil (5) is composed of a not polarization obtaining optical fibre, in particular a not double-refracting monomode fibre,
between each end of the optical fibre coil (5) and the associated outlet (a2, a3) of the 3x3 coupler (2) is arranged a depolarizer (3, 4), and the depolarizers (3, 4) are fibre depolarizers and each fibre depolarizer (3, 4) is composed of two portions of polarization obtaining optical fibres which are spliced together in such a manner that the main axes of two adjacent fibre portions include an angle of 45°,
the lengths of the fibre portions and the length differences between different fibre portions is respectively greater than the depolarization length of the polarization obtaining optical fibre, and
the lengths of the four fibre portions of which the depolarizers (3, 4) are composed are at a ratio 1:2 : 4:8.

2. A fibre gyro according to claim 1, **characterized in that** a light source (L) is provided which emits a broadbanded unpolarized light for the fibre gyro.

3. A fibre gyro according to claim 1, **characterized in that** a light source (L) is provided which emits a polarized light for the fibre gyro.

## Revendications

1. Gyromètre à fibre optique du type Sagnac comprenant un coupleur 3 x 3, une bobine de fibre optique dont les deux extrémités sont reliées optiquement à deux des trois entrées du coupleur ainsi qu'une source lumineuse et deux détecteurs de rayonnement qui sont reliés optiquement aux trois entrées du coupleur, **caractérisés** par le fait
que la bobine de fibre optique (5) se compose d'une fibre optique du type à non-conservation de la polarisation, en particulier une fibre monomode du type à non-biréfringence,
qu'un dépolarisateur (3, 4) est disposé entre chaque extrémité de la bobine de fibre optique (5) et la sortie associée (a2, a3) du coupleur 3 x 3 (2), les dépolarisateurs (3, 4) étant des dépolarisateurs à fibre et chaque dépolarisateurs à fibre (3, 4) se composant de deux tronçons de fibre optique du type à conservation de la polarisation qui sont épissurés l'un avec l'autre de manière que les axes principaux de deux tronçons de fibre voisin fassent un angle de 45°,
que les longueurs des tronçons de fibre et les différences de longueurs entre les tronçons de fibre différents ne sont pas plus grandes que la longueur de dépolarisation de la fibre optique du type à conservation de la polarisation, et
que les longueurs des quatre tronçons de fibre dont sont composés les dépolarisateurs (3, 4) se trouvent dans le rapport 1:2:4:8.

2. Gyromètre à fibre suivant la revendication 1, **caractérisé** par le fait qu'une source lumineuse (L) émettant une lumière non-polarisée à large bande est prévue pour le gyromètre à fibre.

3. Gyromètre à fibre suivant la revendication 1, **caractérisé** par le fait qu'une source lumineuse (L) émettant une lumière polarisée est prévue pour le gyromètre à fibre.
